(19) Europäisches Patentamt
European Patent Office
Office européen des brevets

(11) **EP 4 283 808 A1**

(12) **EUROPÄISCHE PATENTANMELDUNG**

(43) Veröffentlichungstag:
**29.11.2023   Patentblatt 2023/48**

(21) Anmeldenummer: **22175172.0**

(22) Anmeldetag: **24.05.2022**

(51) Internationale Patentklassifikation (IPC):
*H02J 3/00* (2006.01)          *H02J 3/38* (2006.01)

(52) Gemeinsame Patentklassifikation (CPC):
**H02J 3/003; H02J 3/004; H02J 3/381**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Baumgärtner, Thomas**
  **91056 Erlangen (DE)**
• **Thiem, Sebastian**
  **91413 Neustadt an der Aisch (DE)**
• **Wagner, Lisa**
  **90768 Fürth (DE)**

(74) Vertreter: **Siemens Patent Attorneys**
**Postfach 22 16 34**
**80506 München (DE)**

(54) **VERFAHREN ZUM BETREIBEN EINES ENERGIESYSTEMS, COMPUTERPROGRAMM UND ELEKTRONISCH LESBARER DATENTRÄGER**

(57)    Die Erfindung betrifft ein Verfahren zum Betreiben eines Energiesystemsystems (10) umfassenden wenigstens zwei Energieeinrichtungen (12). Ferner betrifft die Erfindung ein Computerprogramm und einen elektronisch lesbaren Datenträger.

FIG 1

EP 4 283 808 A1

**Beschreibung**

Die Erfindung betrifft ein Verfahren zum Betreiben eines Energiesystems gemäß dem Patentanspruch 1. Ferner betrifft die Erfindung ein Computerprogramm gemäß dem Patentanspruch 9 sowie einen elektronisch lesbaren Datenträger gemäß dem Patentanspruch 10.

Wünschenswert ist eine Dekarbonisierung von Energiesystemen, insbesondere im industriellen Umfeld sowie bei gewerblich genutzten Gebäuden. Ein Energiesystem kann mehrere Energieeinrichtungen aufweisen, beispielsweise Gewerke, wie Produktionsmaschinen, und/oder Aggregate, wie Erzeuger beziehungsweise Umwandler von Energie, beispielsweise eine Photovoltaikanlage.

Je nach Art des Energiesystems wird in der Regel für dessen Betrieb entweder ein, insbesondere aktives, Energiemanagementsystem oder ein Lastmanagementsystem, insbesondere ein Spitzen-Lastmanagementsystem, verwendet.

Aufgabe eines Energiemanagementsystems ist die Koordinierung von interner Erzeugung beziehungsweise Umwandlung, Speicherung und/oder Verbrauch von Energie einer Energieeinrichtung. Dagegen ist Aufgabe eines Lastmanagementsystems das Zu-und/oder Abschalten beispielsweise Gewerkes eines Energiesystems in Abhängigkeit von einer Last.

Nachteil eines konventionellen Lastmanagementsystems ist, dass ein Energiesystem nicht prädiktiv betrieben werden kann, da nur situationsbedingt Last abgeworfen und/oder hinzugeschaltet wird. Nachteil heutiger Energiemanagementsysteme ist, dass beispielsweise Aggregate nicht prädiktiv gesteuert werden können.

Aufgabe der vorliegenden Erfindung ist es, ein Verfahren zum Betreiben eines Energiesystems sowie ein Computerprogramm und einen Datenträger bereitzustellen, bei welchen für das Energiesystem ein möglichst $CO_2$-armer, gewerkeübergreifender ganzheitlicher Betrieb ermöglicht wird.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren. Dieses erfindungsgemäße Verfahren dient zum Betreiben eines Energiemanagementsystems, mit wenigstens zwei Energieeinrichtungen, welche jeweils einen Verbraucher und/oder einen Erzeuger beziehungsweise Umwandler und/oder einen Speicher für Energie aufweist, mit einer Managementeinrichtung beziehungsweise ersten Steuerungseinrichtung, durch welche für wenigstens eine der wenigstens zwei Energieeinrichtungen eine aktuell verwendete Energiemenge und/oder Leistung erfasst wird und/oder eine Prognoseberechnung durchgeführt wird, und mit einer Lasteinrichtung beziehungsweise zweiten Steuerungseinrichtung, die wenigstens eine weitere der wenigstens zwei Energieeinrichtungen in Abhängigkeit von einem Lastwert schaltet, wobei durch die Lasteinrichtung die wenigstens eine weitere Energieeinrichtung für die Managementeinrichtung insbesondere als flexible Last abstrahiert wird, und durch die die Lasteinrichtung eine Lastanforderung vorgegeben wird und von der Managementeinrichtung in Abhängigkeit von der vorgegebenen Lastanforderung ein Steuerungswert vorgegeben wird und die Lasteinrichtung die wenigstens eine weitere Energieeinrichtung in Abhängigkeit von dem Steuerungswert, welcher insbesondere einen Leistungswert darstellt beziehungsweise Lastwert darstellt, schaltet.

Der Steuerungswert kann auch als Regelwerk ausgebildet sein, sodass die wenigstens eine weitere Energieeinrichtung beim Schalten gesteuert und/oder geregelt werden kann.

Das Energiesystem kann beispielsweise eine industrielle Anlage Und/oder ein kommerziell beziehungsweise gewerblich genütztes Gebäude sein. Die einzelne Energieeinrichtung kann insbesondere als Gewerk und/oder Aggregat ausgebildet sein. Das einzelne Aggregat kann somit den einen Verbraucher und/oder den einen Erzeuger beziehungsweise Umwandler und/oder den einen Speicher umfassen. Das Gewerk kann der Verbraucher, beispielsweise eine Fertigungsanlage sein, welche beispielsweise eine Grundlast verbraucht. Der Erzeuger beziehungsweise Umwandler kann beispielsweise eine Photovoltaikanlage sein. Bei dem Speicher kann es sich um eine Batterie handeln.

Die Energiemenge kann positiv und/oder negativ sein, je nachdem, ob Energie verbraucht oder bereitgestellt wird.

Das erfindungsgemäße Verfahren ist nicht auf eine Energieform beschränkt, welche durch das Energiesystem benützt wird. Bei der Energie kann es sich beispielsweise um elektrische Energie handeln. Zusätzlich oder alternativ kann die Energieform beispielsweise auch thermische Energie sein, sodass es sich bei den angegebenen Lasten beziehungsweise Energiemengen um thermische Lasten handelt.

Die wenigstens eine der wenigstens zwei Energieeinrichtungen und die wenigstens eine weitere der wenigstens zwei Energieeinrichtung sind insbesondere zwei unterschiedliche Energieeinrichtungen. Alternativ kann die wenigstens eine Energieeinrichtung und die wenigstens eine weitere Energieeinrichtung jedoch auch als eine Energieeinrichtung ausgebildet sein.

Dabei können die Managementeinrichtung und/oder die Lasteinrichtung jeweils derart ausgebildet sein, dass sie beispielsweise nur für einen Teil der Verbraucher und/oder Erzeuger und/oder Speicher der jeweiligen Energieeinrichtung zuständig sind.

Mit anderen Worten wird ein Verfahren zum Betreiben eines Energiemanagements vorgestellt, welches wenigstens zwei Energieeinrichtungen umfasst, welche jeweils einen Verbraucher und/oder einen Erzeuger und/oder einen Speicher für Energie aufweist und für wenigstens eine der wenigstens zwei Energieeinrichtungen ist eine Managementeinrichtung vorgesehen, welche dazu ausgebildet ist, eine aktuell verwendete Energiemenge, wobei diese einen Verbrauch und/oder eine Bereitstellung umfassen kann, zu erfassen und/oder eine Prognoseberechnung, insbesondere für eine in einem Zeitintervall verbrauchte zukünftige Energiemenge, durchzuführen.

Dabei ist für wenigstens eine weitere der wenigstens zwei Energieeinrichtungen eine Lasteinrichtung vorgesehen, welche dazu ausgebildet ist, in Abhängigkeit von einem Lastwert die wenigstens eine weitere Energieeinrichtung ein- und/oder auszuschalten. Ferner ist die Lasteinrichtung dazu ausgebildet, die wenigstens eine weitere Energieeinrichtung für die Managementeinrichtung zu abstrahieren und eine Lastanforderung vorzugeben, wobei von der Managementeinrichtung in Abhängigkeit von der vorgegebenen Lastanforderung ein Steuerungswert vorgegeben wird und die Lasteinrichtung die wenigstens eine weitere Energieeinrichtung in Abhängigkeit von dem Steuerungswert, welcher insbesondere einem Leistungswert beziehungsweise Lastwert entspricht, schaltet.

Die Lasteinrichtung abstrahiert insbesondere ein angeschlossenes Aggregat für das Managementsystem, also das Lastmanagement abstrahiert die angeschlossenen Aggregate für das Energiemanagementsystem. So kann das Aggregat somit im Energiemanagementsystem als spezielle flexible Last integriert werden kann, die insbesondere automatisch bei vorhandener erfindungsgemäßer Kopplung zwischen Managementeinrichtung und Lasteinrichtung konfigurierbar ist. So können bei dieser Kopplung Parameter beziehungsweise Informationen, wie Lastwerte oder dergleichen, beispielsweise über eine Schnittstelle zwischen der Managementeinrichtung und der Lasteinrichtung ausgetauscht werden.

Dabei liegt der Erfindung die Erkenntnis zugrunde, dass bekannte Energiemanagementsysteme, kurz EMS, Erzeugung, Speicherung und Verbrauch einer Energieeinrichtung koordinieren. Dabei kann eine modellprädiktive Regelung von beispielsweise erneuerbaren Energiequellen, wie beispielsweise Photovoltaikanlagen, elektrischen und/oder thermischen Speichern, Blockheizkraftwerken, Wärmepumpen und/oder steuerbaren Lasten, wie beispielsweise Produktionsanlagen, das Laden von Elektroautos und/oder die Ansteuerung von zusätzlichen elektrischen Heizstäben zur Warmwassergewinnung erfolgen. Solch ein Energiemanagementsystem kann Messeinrichtungen für elektrische und/oder thermische Messungen umfassen. Das Energiemanagement benutzt Messeinrichtungen, um mit Aggregaten zu kommunizieren, wodurch eine Überwachung von Infrastruktur, also beispielsweise Verbraucher und/oder Erzeuger der Energieeinrichtung, ermöglicht werden kann. Aus den Messungen beziehungsweise der Erfassung der benötigten und/oder bereitgestellten Energiemenge der Energieeinrichtung kann mittels Datenanalyse eine Prognoseberechnung durchgeführt werden. In der Regel wird ein Energiemanagementsystem an einen Umgebungswert orientiert. Beispielsweise kann solch ein Umgebungswert eine natürliche Angabe zum $CO_2$-Gehalt einer Stromerzeugung und/oder ein Anreiz beziehungsweise Incentive, wie einen aktuellen Energiepreis, umfassen. In der Regel wird für die Prognose beziehungsweise Prognoseberechnung ein Optimierungsproblem gelöst, durch welches beispielsweise Betriebskosten und/oder Kohlenstoffemissionen minimiert werden sollen. Darüber hinaus kann solch ein Energiemanagementsystem ein Planungsmodul, für die Vorhersage eines Lastprofils, welches eine Zeitintervall, beispielsweise 24 Stunden beziehungsweise einen Tag abdeckt, umfassen. Eine Herausforderung für ein Energiemanagement ist die Unsicherheit von vorhergesagten Größen, besonders beispielsweise bei regenerativen Energiequellen wie Photovoltaik, die im Betrieb berücksichtigt werden sollte.

Demgegenüber liegt bei einem konventionellen Lastmanagementsystemen, insbesondere Spitzenlastmanagementsystemen, der Fokus darauf, ein Weg- beziehungsweise Hinzuschalten von Lasten zu ermöglichen, wobei das Weg- beziehungsweise Hinzuschalten typischerweise zyklisch und/oder prioritätsgesteuert beispielsweise mithilfe eines Lastabwurfsignals erfolgt.

Bei dem erfindungsgemäßen Verfahren kann die Lasteinrichtung solch ein Lastmanagementsystem umfassen. Ebenso kann die Managementeinrichtung solch ein konventionelles Energiemanagementsystem umfassen.

Im industriellen Umfeld werden von einem Lastmanagementsystem typischerweise eine Anzahl mehrerer Produktionsanlagen beziehungsweise Teile von Produktionsanlagen betrachtet, die in unterschiedlichen Zustände versetzt beziehungsweise geschaltet werden können. Solch ein Zustand kann beispielsweise ein Laufen, eine Teillast, einen Leerlauf, ein Aus beschreiben. Bei gewerblich genutzten Gebäuden werden häufig Teile von komplexeren Heizung-Luft-Klimasystemen (kurz HKL-System), wie einzelne Heizer und/oder Lüfter per Lastmanagementsystem vorübergehend ausgeschaltet. Ziel für die Anwendung eines Lastmanagementsystems ist es, eine vorübergehende Lastspitze durch Lastreduktion zu vermeiden.

Wie gezeigt, haben ein konventionelles Energiemanagementsystem sowie ein konventionelles Lastmanagementsystem unterschiedliche Aufgaben, welche in der Praxis nicht vom jeweils anderen System übernommen werden können.

Insbesondere für den gewerkeübergreifenden ganzheitlichen Betrieb von insbesondere hinreichen komplexen Energiesystemen ist die erfindungsgemäße Kopplung von aktivem Energiemanagementsystem und Lastmanagementsystem vorteilhaft. Der Kern der Erfindung ist eine Kopplung der Managementeinrichtung, welche insbesondere als Energiemanagementsystem ausgebildet ist, und der Lasteinrichtung, welche insbesondere als Lastmanagementsystem ausgebildet ist, wodurch ein insbesondere synchronisiertes, aber weitestgehend unabhängiges Zusammenspiel ermöglicht wird. Dabei ergibt sich durch das erfindungsgemäße Verfahren der Vorteil, dass das gesamte Energiesystem gewerke-übergreifend prädiktiv, basierend auf verschiedenen Incentives, beispielsweise Energiekosten, $CO_2$-Bilanz und/oder Energieeffizienz, betreiben kann. Die Flexibilität der vom Lastmanagement abstrahierten Aggregate kann dabei ausgenutzt werden. Ferner ergibt sich als Vorteil die Möglichkeit, an lokalen Energiemärkten teilzunehmen und/oder interne Flexibilität extern zu vermarkten, beispielsweise am Regelenergiemarkt beziehungsweise kann eine Vermeidung von Strafkosten im Bilanzkreismanagement erreicht werden.

In vorteilhafter Ausgestaltung der Erfindung ist beziehungsweise sind einer der Verbraucher und/oder einer der Erzeuger und/oder einer der Speicher der wenigstens zwei Energieeinrichtungen als ein Aggregat und/oder als ein Gewerk ausgebildet. Mit anderen Worten weist wenigstens eine der Energieeinrichtungen ein Aggregat beziehungsweise ein Gewerk auf. Dabei kann es sich bei dem Aggregat insbesondere um einen Erzeuger beziehungsweise Umwandler von Energie, wie beispielsweise eine Photovoltaikanlage, eine Windkraftanlage und/oder dergleichen handeln. Ebenso kann ein Batteriespeicher Teil eines Aggregats sein. Bei dem Gewerk handelt es sich insbesondere um eine Produktionsmaschine beziehungsweise eine Produktionsanlage und somit in erster Linie um einen Verbraucher. Dadurch ergibt sich der Vorteil, dass das Verfahren besonders vorteilhaft zum Betreiben von industriellen und/oder gewerblich genutzten Anlagen beziehungsweise Energieeinrichtungen verwendet werden kann.

In weiterer vorteilhafter Ausgestaltung der Erfindung wird als die Managementeinrichtung ein Energiemanagementsystem verwendet. Zusätzlich oder alternativ wird als die Lasteinrichtung ein Lastmanagementsystem verwendet. Mit anderen Worten wird bereits, wie beschrieben, als die Lasteinrichtung ein Lastmanagementsystem und/oder als die Managementeinrichtung ein Energiemanagementsystem betrieben. Dabei kann insbesondere vorteilhaft ein Optimierungsproblem als Grundlage der Prognoseberechnung berechnet beziehungsweise zugrundgelegt werden. Dadurch ergibt sich der Vorteil, dass durch das Verfahren auf besonders vorteilhafte Weise ein Zusammenspiel von Managementeinrichtung mit Lasteinrichtung erreicht werden kann.

In weiterer vorteilhafter Ausgestaltung der Erfindung erfolgt die Prognoseabrechnung in Abhängigkeit von einem Umgebungswert und/oder einem vorgegebenen Zeitintervall. Zusätzlich oder alternativ wird wenigstens eine der Energieeinrichtungen in Abhängigkeit von der Prognoseberechnung gesteuert. Mit anderen Worten wird bei dem Berechnen der Prognose ein Umgebungswert, wie beispielsweise ein Incentive, beispielsweise ein dynamischer Preis und/oder eine Abgabe von Kohlenstoff berücksichtigt. Dabei kann die Prognoseberechnung insbesondere für ein Zeitintervall, beispielsweise im Vorfeld für eine Vortagesplanung und/oder für eine Stunde, berechnet werden kann. Dabei kann wenigstens eine der Energieeinrichtungen, insbesondere die eine Energieeinrichtung, dergestalt ausgebildet sein, dass zumindest eines Ihrer Aggregate und/oder Gewerke zumindest teilweise von dem Energiemanagementsystem beziehungsweise der Managementeinrichtung gesteuert beziehungsweise geregelt werden kann, wobei dies in Abhängigkeit der Prognoseberechnung erfolgt. Dadurch ergibt sich der Vorteil, dass die Prognose beziehungsweise die Prognoseberechnung besonders vorteilhaft reagiert werden kann, wodurch beispielsweise zusätzlich $CO_2$ eingespart werden kann.

In weiterer vorteilhafter Ausgestaltung der Erfindung wird der Lastwert durch die Lasteinrichtung vorgegeben und/oder die Lastanforderung und/oder der Lastwert werden als insbesondere flexibles Leistungsband vorgegeben. Mit anderen Worten wird beispielsweise für die Managementeinrichtung eine flexible Last definiert, wobei ein Leistungsband begrenzt von einer maximalen Leistung und einer minimalen Leistung durch das Lastmanagement beziehungsweise die Lasteinrichtung vorgegeben wird. Dadurch ergibt sich der Vorteil, dass besonders vorteilhaft eine Lastanforderung erfüllt werden kann, da eine benötigte und/oder bereitgestellte Energiemenge über einen gewissen Zeitpunkt, beispielsweise das vorgebbare Zeitintervall, bestimmbar ist.

In weiterer vorteilhafter Ausgestaltung der Erfindung wird über ein Zeitintervall beziehungsweise das Zeitintervall eine Energiemenge vorgegeben, welche innerhalb des Zeitintervalls durch wenigstens eine der Energieeinrichtungen gedeckt wird. Mit anderen Worten kann durch das Verfahren abgeschätzt werden, insbesondere unter Zuhilfenahme der Managementeinrichtung, dass eine zur Verfügung stehende Energiemenge, sowohl im Verbrauch als auch in der Erzeugung, für ein entsprechendes Zeitintervall verfügbar ist. Dadurch ergibt sich der Vorteil, dass das Energiesystem besonders vorteilhaft betrieben werden kann.

In weiterer vorteilhafter Ausgestaltung der Erfindung wird eine über das Zeitintervall von wenigstens einer der Energieeinrichtungen bereitgestellte Energiemenge erfasst und diese in der Prognoseberechnung berücksichtigt. Mit anderen Worten wird, insbesondere durch die Managementeinrichtung, in dem insbesondere aktuell ablaufenden Zeitintervall die zur Verfügung gestellte Energie mitgetrackt beziehungsweise erfasst. Dadurch kann ein entsprechendes Delta in einer Berechnung, insbesondere der Prognoseberechnung, berücksichtigt werden. So kann beispielsweise bei einer Relaxierung, entweder bei einer Energiemenge und/oder beim Leistungsband, ein benötigtes Delta an Energie zur Verfügung gestellt werden. Dadurch ergibt sich der Vorteil, dass das Energiesystem besonders effizient und/oder ausfallsicher betrieben werden kann.

In weiterer vorteilhafter Ausgestaltung der Erfindung wird eine Nachberechnung durchgeführt, welche für eine Wiederholung der Prognose verwendet wird. Zusätzlich oder alternativ wird die Lastanforderung in Abhängigkeit von einem weiteren Umgebungswert vorgegeben. Mit anderen Worten erfolgt eine Nachplanung. Diese kann beispielsweise zyklisch sein und für die flexible Last, welche dem Energiemanagementsystem durch die von dem Lastmanagement durchgeführte Abstraktion vorgegeben wird, berechnet werden. Durch solch eine Nachplanung kann beispielsweise ein Load-Management zur Berechnung eines optimalen Zustands in einem verkürzten Zeithorizont durchgeführt werden. Die Lastanforderung, welche durch die Lasteinrichtung für die weitere Energieeinrichtung erzeugt beziehungsweise gefordert wird, kann ebenfalls in Abhängigkeit von einem Umgebungswert, wie beispielsweise einem $CO_2$-Verbrauch, erfolgen. Dadurch ergibt sich der Vorteil, dass das Verfahren besonders vorteilhaft zum Betreiben des Energiesystems verwendet werden kann.

Ein zweiter Aspekt der Erfindung umfasst ein Computerprogramm. Das Computerprogramm kann beispielsweise in einem Speicher der elektronischen Recheneinrichtung einer Presse geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

FIG 1 schematische Darstellung eines durch ein Verfahren betreibbaren Energiesystems, mit wenigstens zwei Energieeinrichtungen, einer Managementeinrichtung und einer Lasteinrichtung;

FIG 2 Diagramm einer Last beziehungsweise Leistung für das Energiesystems, mit einer durch das Verfahren vorgebbaren Lastanforderung;

FIG 3 Diagramm einer Mindestenergiemenge für eine flexible Last vorgegeben durch die Lasteinrichtung; und

FIG 4 Diagramm für ein Load-Management, welches eine geforderte Leistung flexibel abfahren kann.

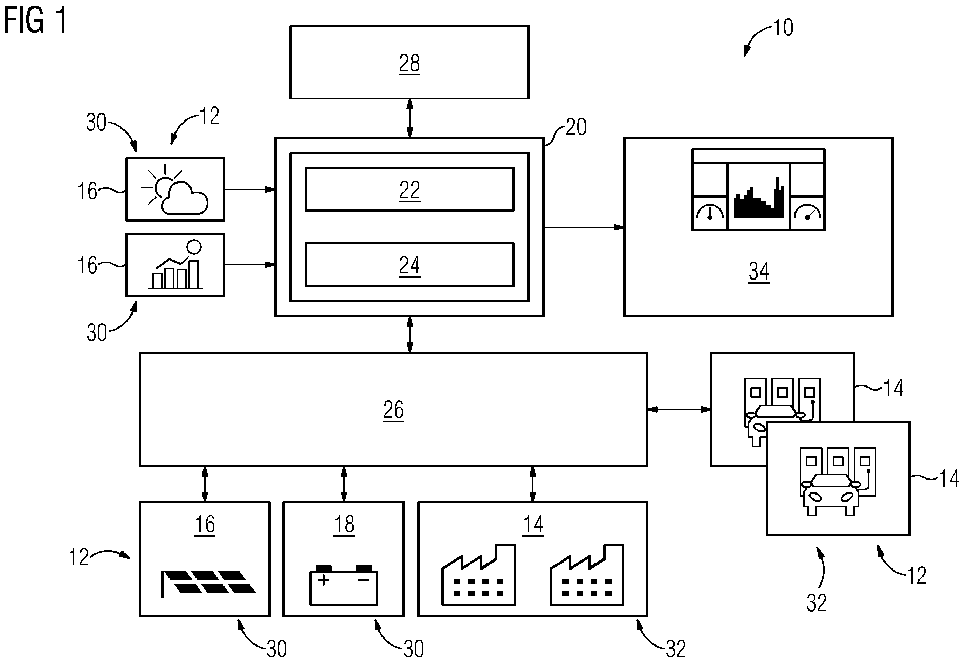

FIG 1 zeigt eine schematische Ansicht eines Energiesystems 10 mit wenigstens zwei Energieeinrichtungen 12, welche jeweils einen Verbraucher 14 und/oder Erzeuger 16 beziehungsweise Umwandler und/oder einen Speicher 18 für Energie aufweisen. Das vorgestellte Energiesystem 10 kann durch ein Verfahren betrieben werden, bei welchem eine Managementeinrichtung 20 für wenigstens eine der wenigstens zwei Energieeinrichtungen 12 eine aktuell verwendete Energiemenge erfasst. Das Erfassen kann beispielsweise mittels einer geeigneten Messeinrichtung durchgeführt werden. Zusätzlich oder alternativ wird eine Prognoseberechnung durch die Managementeinrichtung 20 durchgeführt, wofür beispielsweise eine Vorhersageeinheit 22 vorgesehen ist. Nach der Prognoseberechnung kann eine Optimierung durchgeführt werden, welche durch eine Optimierungseinheit 24 durchgeführt werden kann. Die Prognoseberechnung basiert meist nicht auf einer Optimierung. Vielmehr wird die Prognoseberechnung verwendet, um die Optimierung mit sinnvollen Inputdaten zu füttern.

Ferner wird bei dem Verfahren eine Lasteinrichtung 26 verwendet, welche wenigstens eine weitere der wenigstens zwei Ener-gieeinrichtungen 12 in Abhängigkeit von einem Lastwert schaltet, wobei durch die Lasteinrichtung 26 die wenigstens eine weitere Energieeinrichtung 12 für die Managementeinrichtung 20 insbesondere als flexible Last abstrahiert wird und eine Lastanforderung vorgegeben wird. Von der Managementeinrichtung wird in Abhängigkeit von der vorgegebenen Lastanforderung ein Steuerungswert vorgegeben, so kann die Lasteinrichtung 26 die wenigstens eine weitere Energieeinrichtung 12 in Abhängigkeit von dem Steuerungswert schalten.

Vorteilhafterweise ist die Managementeinrichtung 20 als Energiemanagementsystem ausgebildet. Zusätzlich oder alternativ ist die Lasteinrichtung 26 als ein Lastmanagementsystem, insbesondere als ein Spitzenlastmanagementsystem, ausgebildet. So kann durch das vorgestellte Verfahren eine Kombination aus Energiemanagementsystem und Lastmanagement erfolgen, um das Energiesystem 10 vorteilhaft zu betreiben.

Dabei kann es sich bei dem wenigstens einen Verbraucher 14 und/oder dem einen Erzeuger 16 beziehungsweise Umwandler und/oder einem der Speicher 18 um ein Aggregat 30 und/oder um ein Gewerk 32 handeln. Vorteilhafterweise ist, beispielsweise für einen Fernzugriff, eine Schnittstelle 28 ausgebildet. Ferner kann beispielsweise eine Anzeigevorrichtung 34 vorgesehen sein, durch welche der Betrieb des Energiesystems 10 überwacht und/oder visualisiert werden kann.

Das Lastmanagement, also die Lasteinrichtung 26, abstrahiert wenigstens eines der an sich angeschlossenen Aggregate 30 und/oder Gewerke 32 für das Energiemanagementsystem, die Managementeinrichtung 20. Dabei werden diese derart abstrahiert, dass sie in dem Energiemanagementsystem als insbesondere spezielle flexible Lasten vorgegeben und dadurch von dem Energiemanagementsystem integriert werden können. Bei der Kopplung der beiden Systeme, dem Lastmanagement und dem Energiemanagementsystem, kann somit eine automatische Konfiguration erfolgen.

Gehört relativ am Anfang zur Figurenbeschreibung: Solch ein Energiemanagementsystem dient vorteilhafterweise zur Koordination der internen Erzeuger 16, Verbraucher 14 und/oder Speicher 18 der Energieeinrichtung 12. Das Energiemanagementsystem kann eine modellprädiktive Regelung von erneuerbaren Energiequellen, wie beispielsweise Photovoltaikanlagen, welche Erzeuger 16 darstellen, bereitstellen. Auch Messungen, insbesondere in Form der Erfassung der aktuell verwendeten Energiemenge, der wenigstens einen Energieeinrichtung 12 können von der Energiemanagementsystem durchgeführt werden. Für die Prognoseberechnung wird ein Prognoseverfahren verwendet, welches beispielsweise durch die Vorhersageeinheit 22 ausgeführt wird.

Das Lastmanagement dient insbesondere dazu, situationsbedingt Last abzuwerfen beziehungsweise hinzuzuschalten und somit beispielsweise eines der Gewerke 32, welches insbesondere wenigstens einen Verbraucher 14 umfasst, bei einem Mangel an durch Erzeuger 16 bereitgestellter Leistung abzuschalten.

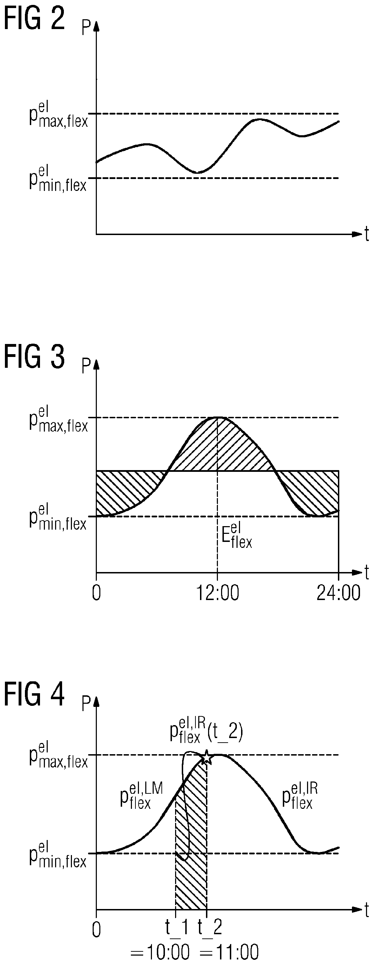

FIG 2 zeigt in einem Diagramm die durch die Lasteinrichtung 26 vorgegebene Lastanforderung sowie einen berechneten Wert der Managementeinrichtung 20. Dabei kann die Lastanforderung als Leistungsband mit einem oberen und einem unteren Grenzwert vorgegeben werden.

So kann die flexible Last, welche dem durch das Lastmanagement an das Energiemanagementsystem gekoppelte Aggregat 30 entspricht, dergestalt sein, dass das Leistungsband durch das Lastmanagement vorgegeben wird.

Dabei kann das Leistungsband eine minimale, zeitabhängige Leistung $P^{el}_{min,flex}(t)$ und eine maximale, zeitabhängige Leistung $P^{el}_{max,flex}(t)$ umfassen. Dabei charakterisiert das Leistungsband die minimale und maximale Leistung für die Leistungsaufnahme der durch das Lastmanagement abstrahierten Last, also zumindest eines der Aggregate 30 und/oder Gewerke 32.

Dabei gilt für die abstrahierte Last $P^{el}_{flex}(t)$:

$$P^{el}_{min,flex}(t) \leq P^{el}_{flex}(t) \leq P^{el}_{max,flex}(t) \ \forall t \in T$$

So zeigt das Diagramm der FIG 2, dass durch $P^{el}_{min}$ und $P^{el}_{max}$ definierte und von der Lasteinrichtung 26 vorgegebene Leistungsband. Die Kurve innerhalb des Leistungsbandes ist eine insbesondere durch das Energiemanagementsystem berechnete Lastkurve. So liegt das Lastmanagement für das vorgestellte Verfahren insbesondere die Leistungsschranken fest. Zusätzlich oder alternativ sind die Lastanforderung und/oder der Lastwert als insbesondere flexibles Leistungsband durch die Lasteinrichtung 26 vorgegeben.

Dabei kann beispielsweise auch eine Mindestenergiemenge über einen konfigurierbaren Zeitraum, die der flexiblen Last zur Verfügung gestellt werden muss oder von dieser abgenommen werden muss, gegeben sein durch:

$$\sum_{t \in T} P^{el}_{flex}(t) * \Delta t \geq E^{el}_{flex} \ \forall t \in T.$$

FIG 3 zeigt ein Diagramm, bei welchem ein optimales Einhalten einer Mindestenergiemenge für die flexible Last aus dem Lastmanagement gezeigt wird. Daraus wird ersichtlich, dass eine geforderte Mindestenergiemenge der flexiblen Last nicht konstant erfüllt werden muss, sondern über einen vorgegebenen Zeitraum, hier ein Tag, gedeckt werden kann.

Beispielsweise kann in einem Fabrikgebäude, welches beispielsweise eine der Energieeinrichtungen 12 darstellt, eine Photovoltaikanlage und somit ein Erzeuger 16 und ferner eine flexible Last, für eine Produktionsmaschinen, angeordnet sein. So wäre es besonders vorteilhaft, die Last mittags, wenn eine Sonneneinstrahlung und somit die Energiemenge beziehungsweise Leistung am höchsten ist, die vorgegebene Lastanforderung beziehungsweise den Lastwert zu heben und beispielsweise in der Nacht auf eine minimale Leistung zu drosseln. Dabei sollte berücksichtigt werden, dass die geforderte Mindestenergiemenge insgesamt erbracht wird.

In FIG 3 trennt eine waagrechte Linie, grau schraffierten Flächen, in eine Fläche oberhalb der waagrechten Linie und zwei Flächen unterhalb der Linie. Die waagrechte Linie stellt beispielsweise den Mittelwert der Lastanforderung dar, und so ist zu sehen, dass 12:00 Uhr mittags mehr als der Mittelwert erbracht wird und in der Nacht weniger. Ist die Summe der beiden Flächeninhalte der beiden unteren Flächen gleich dem Flächeninhalt der oberen Fläche, wurde genau die geforderte Energiemenge beziehungsweise Leistung erbracht und/oder abgenommen.

Im Betrieb des Energiesystems 10 können, beispielsweise über eine weitere nicht gezeigte Schnittstelle, zwischen Energiemanagementsystem, also der Managementeinrichtung 20, und dem Lastmanagement, also der Lasteinrichtung 26, Daten ausgetauscht werden.

Über die Schnittstelle kann beispielsweise von der Leistungseinrichtung 26 ein aktueller aggregierter Leistungswert bereitgestellt werden, welcher insbesondere die Summe der Leistungen der abstrahierten Aggregate 30 umfasst. Ferner wird von der Lasteinrichtung 26 an die Managementeinrichtung 20 das aktuelle Leistungsband, wie beispielsweise in FIG 2 gezeigt, vorgegeben.

Vorteilhafterweise wird eine Mindestenergiemenge und ein zugehöriger Zeitraum, insbesondere falls das Leistungsband dynamisch variierbar ist, von dem Lastmanagement an das Energiemanagementsystem übertragen. Mit anderen Worten wird beispielsweise über ein Zeitintervall eine Energiemenge vorgegeben, welche innerhalb des Zeitintervalls durch wenigstens eine der Energieeinrichtungen 12 gedeckt wird.

Die Lasteinrichtung 26 ist zum Schalten wenigstens einen der Energieeinrichtungen 12 ausgebildet und kann somit insbesondere deren wenigstens eines Aggregat 30 und/oder Gewerk 32 steuern.

Durch die Kopplung mit der Managementeinrichtung 20 kann die wenigstens eine weitere Energieeinrichtung 12 in Abhängigkeit von dem Steuerungswert geregelt und/oder gesteuert werden. Dazu kann das Energiemanagementsystem, die Managementeinrichtung 20, über die Schnittstelle einen anzusteuernden Leistungswert, den Steuerungswert, bereitstellen. Durch diesen Steuerungswert kann die weitere Energieeinrichtung 12 in Abhängigkeit von dem Steuerungswert durch die Lasteinrichtung 26 durch das Schalten gesteuert und/oder geregelt werden kann.

Vorteilhafterweise wird durch die Managementeinrichtung 20 insbesondere in einem aktuellen Zeitintervall die zur Verfügung gestellte Energie mitgetrackt und vorteilhafterweise ausgewiesen. So kann ein entsprechendes Delta in den Berechnungen, insbesondere der Prognoseberechnung, berücksichtigt werden.

Dabei wird beispielsweise angenommen:

$$\sum_{t \in T\sim} P^{el}_{flex}(t) * \Delta t \geq E^{el}_{flex} - E^{el}_{\sim,flex} \pm \Delta \ \forall t \ \in T\sim$$

Mit $E^{el}_{flex}$ als gesamte Mindestenergie dargestellt und $E^{el}_{\sim,flex}$ ist die bereits davon verbrauchte Energie bis zu einem Zeithorizont T~. Zusammengefasst kann die von einer der Energieeinrichtung 12 und insbesondere den wenigstens beiden Energieeinrichtungen 12 bereitgestellte Energiemenge erfasst werden und dadurch in der Prognoseberechnung berücksichtigt werden.

Falls ein Bedarf besteht, kann eine Relaxierung erfolgen, bei der entweder die Energiemenge oder das Leistungsband angeglichen werden, falls das benötigte Delta an Energie nicht im spezifizierten Leistungsband zur Verfügung gestellt werden kann.

Der Term $\pm \Delta$ in obiger Formel ist gleich 0, wenn die Differenz $E^{el}_{flex} - E^{el}_{\sim,flex}$ durch die Leistung $P^{el}_{flex}(t)$ von dem Leistungsband erbracht werden kann.

Gilt dies nicht, so wird die Differenz der Energiemengen durch das Delta so korrigiert, dass die Leistungsschranken des Leistungsbandes erfüllt sind.

Die Berechnung des Deltas kann insbesondere in einem Pre-Processingschritt vor der eigentlichen Optimierung erfolgen. Bei dem Pre-Processing kontrolliert das Energiemanagement beispielsweise, ob Leistung verschoben werden sollte.

Die Prognoseberechnung wird insbesondere in Abhängigkeit von einem Umgebungswert, beispielsweise einem Incentive und/oder einem Kohlendioxidverbrauch, berechnet. Zusätzlich oder alternativ wird die Prognoseberechnung insbesondere für ein vorgegebenes Zeitintervall durchgeführt. Durch das Verfahren und die Kombination der Energieeinrichtung 12 mit der Leistungseinrichtung 26 kann ferner vorteilhaft wenigstens eine der Energieeinrichtungen 12 in Abhängigkeit von der Prognoseberechnung gesteuert werden.

Ferner ist von Vorteil, dass eine Nachberechnung durchgeführt werden kann, welche für eine Wiederholung der Prognoseberechnung verwendet werden kann. Mit anderen Worten kann neben einer Day Ahead-Planung auch eine insbesondere zyklische Nachplanung, beispielsweise mit mehreren ineinandergreifenden Rechnungen erfolgen.

Zusätzlich oder alternativ kann die Lastanforderung in Abhängigkeit von einem weiteren Umgebungswert vorgegeben werden. So kann die Energie, die der flexiblen Last zugeführt wird, incentiviert werden, indem zum Beispiel Einnahmen vom Verkauf an einem lokalen Energiemarkt generiert werden. Dieser kann beispielweise über die Schnittstelle 28 angebunden sein. Eine Zielfunktion des Energiemanagementsystems kann entsprechend angepasst werden kann. In dem Fall, in dem keine Flexibilität im Energiemanagement ausgenutzt werden kann, das heißt $P_{max}^{el} = P_{min}^{el}$ ist eine Kopplung durch die Übermittlung entsprechender Profile immer noch vorteilhaft, da beispielsweise Prognosefehler vermieden werden können. So kann ein Berechnen von Lastprognosen durch das Energiemanagementsystems entfallen.

FIG 4 zeigt, dass die zyklische Nachplanung für die flexible Last die Kurve $P_{flex}^{el,IR}(t)$ berechnet hat. Setzt nun die feine Stufe der Nachplanung, das sogenannte Load-Management, zur Berechnung eines optimalen Zustands in einem verkürzten Zeithorizont von beispielsweise einer Stunde ein. Dabei wird die Energiemenge $E_{flex}^{el,IR}$ errechnet, welche in dieser einen Stunde, beispielsweise wie in FIG 4 zwischen 11:00 Uhr und 12:00 Uhr, verbraucht werden soll. Dies wird dem Load-Management mitgeteilt, welches jedoch die Flexibilität besitzt, die Leistungskurve unter Berücksichtigung des Leistungsbandes, vergleiche Kurve $P_{flex}^{el,LM}(t)$, zu verändern.

Somit gilt $\sum_{t \in T*} P_{flex}^{el}(t) * \Delta t \geq E_{flex}^{el,IR}$ für den Zeitraum T* zwischen 11:00 Uhr und 12:00 Uhr. Durch Tracken der Energiemenge kann das Load-Management die geforderte Leistung innerhalb der Grenze flexibel abfahren.

Durch das vorgestellte Verfahren wird vorteilhaft eine Kopplung von Energiemanagementsystem und Lastmanagement für das gesamte Energiesystem 10 gezeigt. Durch die Kopplung kann gewerkeübergreifend, prädiktiv basierend auf verschiedenen Incentives, beispielsweise Energiekosten, $CO_2$-Verbrauch und/oder Energieeffizient, ein Betrieb ermöglicht werden. Die Flexibilität der vom Lastmanagement abstrahierten Aggregate 30 kann für die Kopplung ausgenutzt werden. Ferner besteht die Möglichkeit, an lokalen Energiemärkten teilzunehmen und/oder interne Flexibilität extern zu vermarkten, beispielsweise am Regelenergiemarkt.

Bezugszeichenliste

10   Energiesystem
12   Energieeinrichtung
14   Verbraucher
16   Erzeuger
18   Speicher
20   Managementeinrichtung
22   Vorhersageeinheit
24   Optimierungseinheit
26   Lasteinrichtung
28   Schnittstelle
30   Aggregat
32   Gewerk
34   Anzeigeeinrichtung

**Patentansprüche**

1. Verfahren zum Betreiben eines Energiesystemsystems (10), mit wenigstens zwei Energieeinrichtungen (12), welche jeweils einen Verbraucher (14) und/oder einen Erzeuger (16) und/oder einen Speicher (18) für Energie aufweist, mit einer Managementeinrichtung (20), durch welche für wenigstens eine der wenigstens zwei Energieeinrichtungen (12) eine aktuell verwendete Energiemenge erfasst wird und/oder ein Prognoseberechnung durchgeführt wird, und mit einer Lasteinrichtung (26), welche wenigstens eine weitere der wenigstens zwei Energieeinrichtung (12) in Abhängigkeit von einem Lastwert schaltet, wobei durch die Lasteinrichtung (26) die wenigstens eine weitere Energieeinrichtung (12) für die Managementeinrichtung (20) abstrahiert wird und eine Lastanforderung vorgegeben wird und von der Managementeinrichtung (20) in Abhängigkeit von der vorgegebenen Lastanforderung eine Steuerungswert vorgegeben wird und die Lasteinrichtung (26) die wenigstens eine weitere Energieeinrichtung (12) in Abhängigkeit von dem Steuerungswert schaltet.

2. Verfahren nach Anspruch 1, **dadurch gekennzeichnet, dass** einer der Verbraucher (14) und/oder einer der Erzeuger (16) und/oder einer der Speicher (18) der wenigstens zwei Energieeinrichtungen (12) als ein Aggregat (30) und/oder als ein Gewerk (32) ausgebildet ist.

3. Verfahren nach Anspruch 1 oder 2, **dadurch gekennzeichnet, dass** als die Managementeinrichtung (20) ein Energiemanagementsystem und/oder als die Lasteinrichtung (26) ein Lastmanagementsystem verwendet wird.

4. Verfahren nach Anspruch 1 bis 3, **dadurch gekennzeichnet, dass** die Prognoseberechnung in Abhängigkeit von einem Umgebungswert und/oder eines vorgegebenes Zeitintervall durchgeführt wird und/oder wenigstens eine der Energieeinrichtungen (12) in Abhängigkeit von der Prognoseberechnung gesteuert wird.

5. Verfahren nach einem der vorhergehenden Ansprüche, **dadurch gekennzeichnet, dass** der Lastwert durch die Lasteinrichtung (26) vorgegeben wird und/oder die Lastanforderung und/oder der Lastwert als Leistungsband vorgegeben werden.

6. Verfahren nach einem der vorhergehenden Ansprüche, **dadurch gekennzeichnet, dass** über ein Zeitintervall eine Energiemenge vorgeben wird, welche innerhalb des Zeitintervalls durch wenigstens eine der Energieeinrichtung (12) gedeckt wird.

7. Verfahren nach einem der vorhergehenden Ansprüche, **dadurch gekennzeichnet, dass** eine über das Zeitintervall von wenigstens einer der Energieeinrichtungen (12) bereitgestellte Energiemenge erfasst wird und diese in der Prognoseberechnung berücksichtigt wird.

8. Verfahren nach einem der vorhergehenden Ansprüche, **dadurch gekennzeichnet, dass** eine Nachberechnung durchgeführt wird, welche für eine Wiederholung der Prognoseberechnung verwendet wird und/oder die Lastanforderung in Abhängigkeit von einem weiteren Umgebungswert vorgegeben wird.

9. Computerprogramm, welches direkt in einen Speicher einer elektronischen Recheneinrichtung ladbar ist, mit Programmmitteln, um die Schritte des Verfahrens nach einem der Ansprüche 1 bis 8 auszuführen, wenn das Programm in der elektronischen Recheneinrichtung ausgeführt wird.

10. Elektronisch lesbarer Datenträger mit darauf gespeicherten elektronisch lesbaren Steuerinformationen, welche zumindest ein Computerprogramm nach Anspruch 9 umfassen und derart ausgestaltet sind, dass sie bei Verwendung des Datenträgers in einer elektronischen Recheneinrichtung ein Verfahren nach einem der Ansprüche 1 bis 8 durchführen.

FIG 1

FIG 2

$p_{max,flex}^{el}$

$p_{min,flex}^{el}$

$P$

$t$

FIG 3

$p_{max,flex}^{el}$

$p_{min,flex}^{el}$

$P$

$E_{flex}^{el}$

0    12:00    24:00

$t$

FIG 4

$p_{flex}^{el,IR}(t\_2)$

$p_{max,flex}^{el}$

$p_{flex}^{el,LM}$

$p_{flex}^{el,IR}$

$p_{min,flex}^{el}$

$P$

0    t_1    t_2
     =10:00    =11:00

$t$

Europäisches Patentamt

European Patent Office

Office européen des brevets

# EUROPÄISCHER RECHERCHENBERICHT

**Nummer der Anmeldung**

**EP 22 17 5172**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2010/332373 A1 (CRABTREE JASON [US] ET AL) 30. Dezember 2010 (2010-12-30) * Absätze [0086] – [0093]; Abbildungen 2,3 * ----- | 1-10 | INV. H02J3/00 H02J3/38 |
| X | US 2012/150361 A1 (LAZARIS SPYROS J [US]) 14. Juni 2012 (2012-06-14) * Absätze [0036] – [0095]; Abbildungen 1-4 * ----- | 1,9,10 | |
| X | US 2021/313834 A1 (FORBES JR JOSEPH W [US]) 7. Oktober 2021 (2021-10-07) * Absätze [0032], [0086] – [0088], [0112], [0121], [0131] – [0132]; Abbildungen 10,11 * ----- | 1,9,10 | |

**RECHERCHIERTE SACHGEBIETE (IPC)**

**H02J**

Der vorliegende Recherchenbericht wurde für alle Patentansprüche erstellt

| Recherchenort | Abschlußdatum der Recherche | Prüfer |
|---|---|---|
| **München** | **18. November 2022** | **Bergler, Christian** |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 5172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-11-2022

| Im Recherchenbericht angeführtes Patentdokument | Datum der Veröffentlichung | Mitglied(er) der Patentfamilie | Datum der Veröffentlichung |
|---|---|---|---|
| US 2010332373 A1 | 30-12-2010 | KEINE | |
| US 2012150361 A1 | 14-06-2012 | US 2012150361 A1 | 14-06-2012 |
| | | US 2015105924 A1 | 16-04-2015 |
| | | US 2015105928 A1 | 16-04-2015 |
| US 2021313834 A1 | 07-10-2021 | AU 2013296439 A1 | 19-02-2015 |
| | | CA 2880044 A1 | 06-02-2014 |
| | | EP 2880733 A1 | 10-06-2015 |
| | | KR 20150040894 A | 15-04-2015 |
| | | MX 348042 B | 25-05-2017 |
| | | US 8588991 B1 | 19-11-2013 |
| | | US 2014039699 A1 | 06-02-2014 |
| | | US 2014039701 A1 | 06-02-2014 |
| | | US 2014039703 A1 | 06-02-2014 |
| | | US 2014277786 A1 | 18-09-2014 |
| | | US 2014277787 A1 | 18-09-2014 |
| | | US 2015073615 A1 | 12-03-2015 |
| | | US 2015088325 A1 | 26-03-2015 |
| | | US 2015127178 A1 | 07-05-2015 |
| | | US 2017025893 A1 | 26-01-2017 |
| | | US 2017077751 A1 | 16-03-2017 |
| | | US 2017338692 A1 | 23-11-2017 |
| | | US 2017338693 A1 | 23-11-2017 |
| | | US 2017358949 A1 | 14-12-2017 |
| | | US 2018123390 A1 | 03-05-2018 |
| | | US 2019379238 A1 | 12-12-2019 |
| | | US 2020036224 A1 | 30-01-2020 |
| | | US 2020136430 A1 | 30-04-2020 |
| | | US 2020161894 A1 | 21-05-2020 |
| | | US 2020259364 A1 | 13-08-2020 |
| | | US 2021194279 A1 | 24-06-2021 |
| | | US 2021242714 A1 | 05-08-2021 |
| | | US 2021313834 A1 | 07-10-2021 |
| | | US 2021376656 A1 | 02-12-2021 |
| | | US 2022247208 A1 | 04-08-2022 |
| | | WO 2014022596 A1 | 06-02-2014 |
| | | ZA 201500515 B | 26-10-2016 |

EPO FORM P0461

Für nähere Einzelheiten zu diesem Anhang : siehe Amtsblatt des Europäischen Patentamts, Nr.12/82